# EUROPEAN PATENT SPECIFICATION

(11) **EP 1 406 393 B1**
(45) Date of publication and mention of the grant of the patent: **01.03.2006**
(21) Application number: 01947916.1
(22) Date of filing: 09.07.2001
(51) Int. Cl.: H04B 1/16, H04H 1/00

(54) **Vehicle audio system**
Auf einem Fahrzeug befindliches Audiosystem
Système audio embarqué

(43) Date of publication of application: 07.04.2004
(73) Proprietor: MITSUBISHI DENKI KABUSHIKI KAISHA, Tokyo 100-8310 (JP)
(72) Inventor: Senoo,Takashi, Chiyoda-ku,Tokyo 100-8310 (JP)
(74) Representative: Gleiter, Hermann
(86) International application number: PCT/JP2001/005926
(87) International publication number: WO 2003/007492

(56) References cited:
- EP-A- 0 901 248
- DE-A- 4 136 068
- JP-A- 6 268 482
- JP-A- 7 264 085
- JP-A- 7 283 746
- JP-U- 1 095 891
- JP-U- 1 177 494

## Description

### Technical Field

The present invention relates to a mobile audio apparatus of a type in which a tuner circuit is shared by an AM radio receiver and an FM radio receiver.

### Background Art

In Europe or North America, a radio data system (RDS) is used in FM radio broadcasting. This is a system for broadcasting information of specific fields, such as news, sports or music, through an FM radio wave. This radio data system includes an audio signal modulated with a frequency of, for example, 19 kHz or 38 kHz, and RDS data modulated with a frequency of 57 kHz. The RDS data includes PS Name (broadcasting station name), PTY (broadcast type), PI (broadcast code), TA, TP (traffic information), AF (alternative frequency), and the like. The RDS data is designed to be obtained even when any broadcasting frequency of the FM radio broadcasting is selected. Besides, even in a state where a sound source other than a radio receiver, for example, a minidisk player (MD), a compact disk player (CD) and a tape reproducer is selected and is reproduced, the RDS data of the FM radio broadcasting is designed to be received.

The mobile audio apparatus has a function of receiving reservation for a specific broadcast of the radio data system. This receiving reservation is designed to reserve a specific broadcast content, and for example, a specific broadcast type contained in the PTY (broadcast type) can be reserved, or TA, TP (traffic information) can be reserved. This receiving reservation is designed to make a reservation by specifying the broadcast content irrespective of a broadcasting frequency, and is performed by causing a storage device for storing reservation contents to store the specific broadcast content. When a broadcast having content consistent with the stored specific broadcast content is started, a control is performed to automatically receive the broadcast of the broadcast content.

By the way, in the mobile audio apparatus, there is a tuner shared type, that is, a type in which a tuner circuit is shared by an AM radio receiver and an FM radio receiver. This tuner shared type mobile audio apparatus has merits that as compared with one in which different tuner circuits are respectively provided for an AM radio receiver and an FM radio receiver, the structure of the receiver is simplified and the cost of the apparatus can be reduced, and it is widely used.

The conventional mobile audio apparatus of the tuner shared type is structured such that the receiving reservation to the radio data system in the FM radio broadcasting is automatically cancelled in accordance with the reception of the AM radio broadcasting. Thus, there is a problem that one fails to hear a reserved broadcast of the radio data system, and also, it is necessary to newly perform an operation for the reservation of the radio data system after the reception of the AM radio broadcasting, and the operation is troublesome.

In an mobile audio apparatus of a type in which a tuner is shared by an AM radio receiver and an FM radio receiver, this invention proposes a new mobile audio apparatus in which in a case where a reception changing operation to an AM radio broadcast is performed in a state where a receiving content reservation to an FM radio broadcast has been made, the reception changing operation is nullified.

Besides, in a mobile audio apparatus of a type in which a tuner is shared by an AM radio receiver and an FM radio receiver, this invention proposes a new mobile audio apparatus including means for, in a case where a reception changing operation to an AM radio broadcast is performed in a state where a receiving content reservation to an FM radio broadcast has been made, nullifying the reception changing operation not notifying an operator.

JP-A-7 264 085 and similarly JP 1 177 494 U disclose a mobile audio apparatus, wherein a control part is provided with a control operation for operating a radio reception part, a tape reproducing part and/or a disk reproducing part. Further, a display switching means is provided for putting out the display of an area corresponding to a key not related to the reception of an optional program or of traffic information or the like.

### Disclosure of the Invention

A mobile audio apparatus according to this invention is a mobile audio apparatus in which a tuner is shared by an AM radio receiver (13) and an FM radio receiver (15), and is characterized in that the mobile audio apparatus includes two operation parts (50A, SOB) both being capable of making a receiving reservation to an FM radio broadcast and performing a reception changing operation to an AM radio broadcast, and in a case where the reception changing operation to the AM radio broadcast is performed by one of the operation parts in a state where the receiving reservation to the FM radio broadcast has been made by one of the operation parts, this reception changing operation is nullified.

In the mobile audio apparatus of this invention, since the reception changing operation to the AM radio broadcast is nullified in the state where the receiving reservation to the FM radio broadcast has been made, it is possible to improve a problem of failing to hear the reserved FM radio broadcast, and also, it becomes unnecessary to perform an operation of again making a receiving reservation to the FM radio broadcast which was erased after the reception of the AM radio broadcast, and the operation can also be simplified.

Besides, the mobile audio apparatus of this invention is characterized in that the apparatus further includes a display part (59) for carrying out a display to an operator, and in the case where the reception changing operation to the AM radio broadcast is performed in the state where the receiving reservation to the FM radio broadcast has been made, this display part (59) shows the operator that the receiving reservation to the FM radio broadcast has been made.

Besides, the mobile audio apparatus of this invention is characterized in that the apparatus further includes a sound signal generation part (31) for emitting a sound to the operator, and in the case where the reception changing operation to the AM radio broadcast is performed in the state where the receiving reservation to the FM radio broadcast has been made, the sound is emitted to the operator by this sound signal generation part (31).

By the display with this display part (59) or the sound with the sound signal generation part (31), it is possible to notify the operator that the receiving reservation to the FM radio broadcast has been made and the reception changing operation to the AM radio was nullified, and a further reception changing operation to the AM radio broadcast can be prevented.

### Brief Description of the Drawings

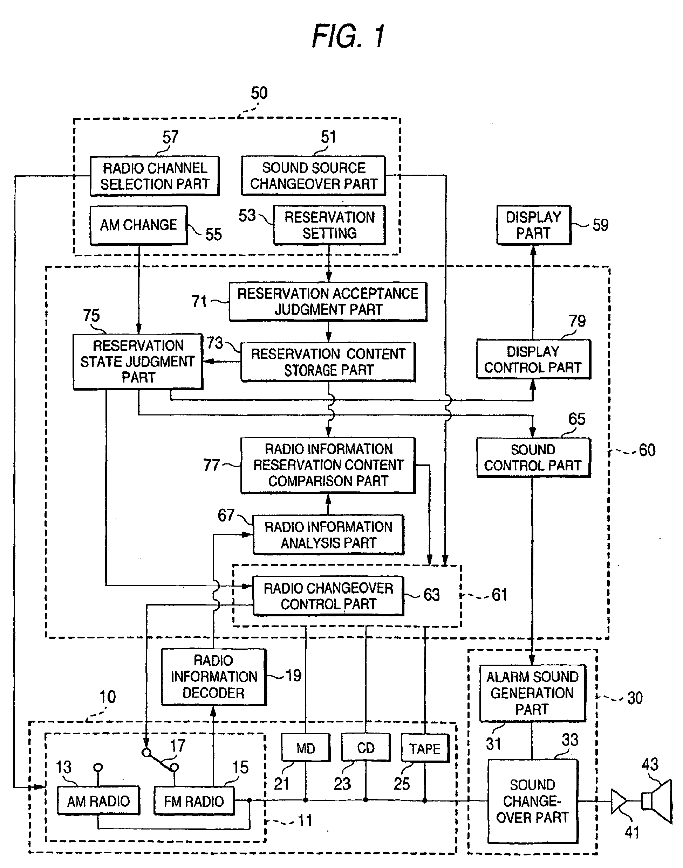

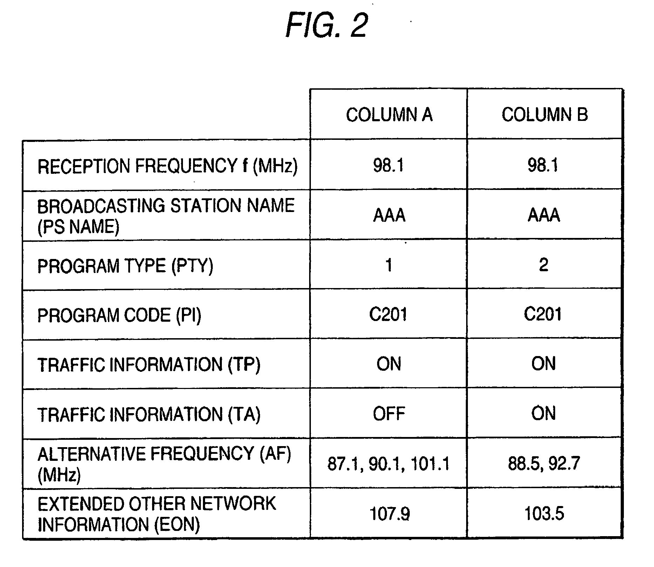

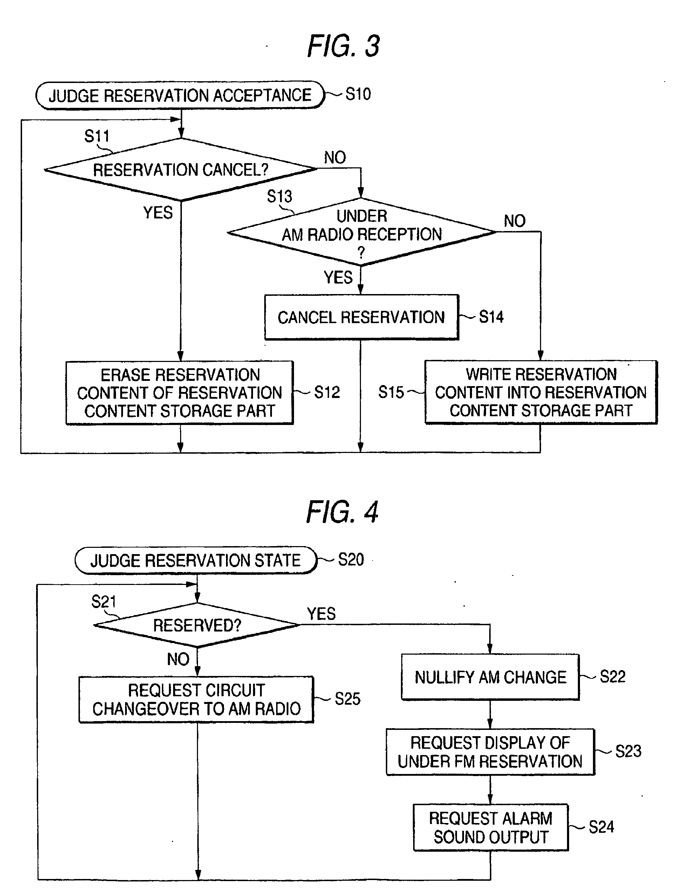

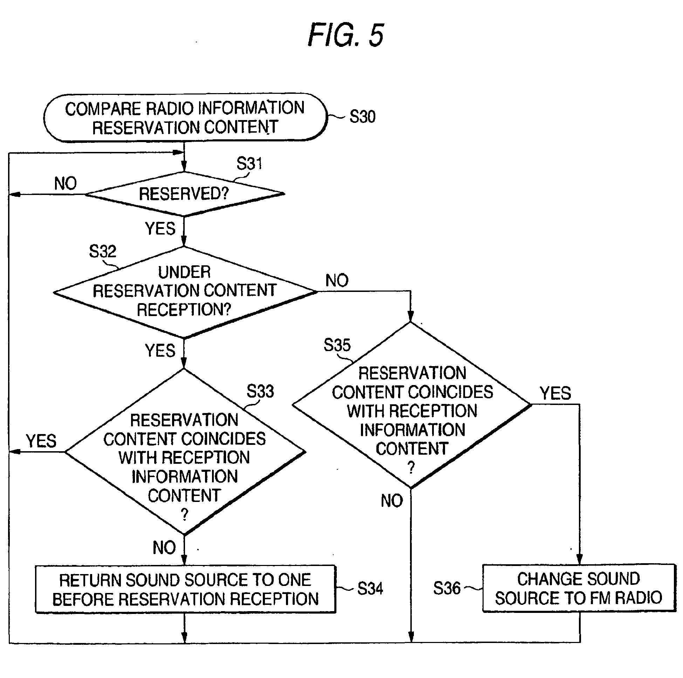

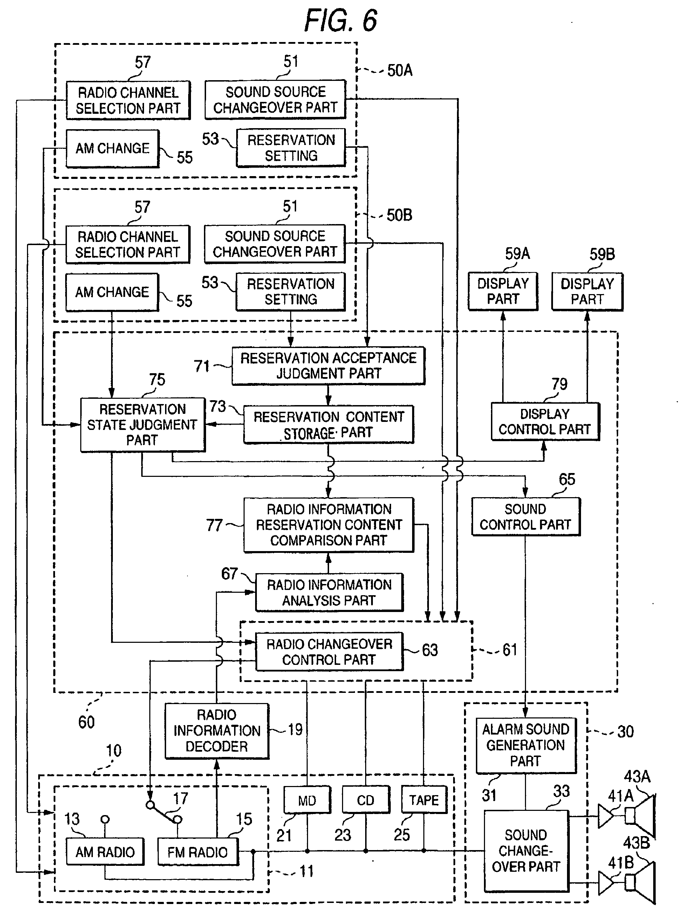

Fig. 1 is a block circuit diagram showing embodiment 1 of a mobile audio apparatus according to this invention, Fig. 2 is a diagram showing an example of RDS data of a radio data system, Fig. 3 is an operation flowchart of a reservation acceptance part of the embodiment 1 of the mobile audioapparatus of this invention, Fig. 4 is an operation flowchart of a reservation state comparison part of the embodiment 1, Fig. 5 is an operation flowchart of a radio information reservation content comparison part of the embodiment 1, and Fig. 6 is a block circuit diagram showing embodiment 2 of a mobile audio apparatus according to this invention.

### Best Mode for Carrying Out the Invention

### Embodiment 1

### [Description of the whole structure]

Fig. 1 is a block circuit diagram showing embodiment 1 of a mobile audio apparatus according to this invention. The mobile audio apparatus of this embodiment 1 includes a sound source (10), a sound control circuit (30), a power amplifier (41), a speaker (43), an operation part (50), a display part (59), and a control microcomputer (60).

### [Description of the sound source (10)]

First, the sound source (10) includes a radio circuit (11), a minidisk player (MD) (21), a compact disk player (CD) (23), and a tape reproducer (25). The radio circuit (11) includes an AM radio receiver (13), an FM radio receiver (15), and a changeover switch (17), and the changeover switch (17) selects and activates one of the AM radio receiver (13) and the FM radio receiver (17).

In the AM radio receiver (13) and the FM radio receiver (15), their tuner circuit is constructed to be shared, and an FM radio broadcast including a radio data system can not be received during the reception of the AM radio by the AM radio receiver (13). However, during the reproduction of the MD (21), the CD (23), and the tape reproducer (25) other than the AM radio receiver (13), the FM radio receiver (15) can receive the FM radio broadcast including the radio data system, and can receive the RDS data of the radio data system. The FM radio receiver (15) is provided with a radio information decoder circuit (19), and when the FM radio receiver (15) receives the radio data system of the FM broadcast, this radio information decoder circuit (19) outputs an RDS data signal.

### [Description of the sound control part (30), the power amplifier (41), and the speaker (43)]

The respective outputs of the radio circuit (11), the MD (21), the CD (23), and the tape reproducer (25) are connected to the sound control circuit (30), a control is performed so that one of them is selected and activated by the control microcomputer (60), and its sound output is inputted to the sound control circuit (30). The sound control circuit (30) includes an alarm sound (BEEP sound) generation part (31) and a sound changeover part (33). The alarm sound generation part (31) is a circuit for generating an alarm sound to the operator (driver). The sound changeover part (33) receives a selected sound output from the sound source (10) and an alarm sound signal from the alarm sound generation part (31), and selects and outputs one of them. The power amplifier (41) is connected to an output part of the sound changeover part (33), and the on-vehicle speaker (43) is connected to an output part of this power amplifier (41).

### [Description of the operation part (50) and the display part (59)]

The operation part 50 includes a sound source changeover part (51), a reservation setting (53), an AM change (55), and a radio channel selection part (57). The sound source changeover part (51) performs a selection changeover operation of the respective sound sources in the sound source (10). The reservation setting (53) performs the setting of reservation content or reservation cancel to the radio data system in accordance with, for example, a button operation. The AM change (55) issues an instruction to change over the reception of the FM radio broadcast to the reception of the AM radio broadcast by, for example, a button operation. The radio channel selection part (57) sets a reception frequency for the AM radio receiver (13) and the FM radio receiver (15), and has, for example, a preset function of a reception frequency, a manual selection function, and a frequency automatic search function. The display part (59) to the operator (driver) is provided in the vicinity of the operation part (50).

### [Description of the control microcomputer (60)]

The control microcomputer (60) includes a sound source control part (61), a sound control part (65), a radio information analysis part (67), a reservation acceptance judgment part (71), a reservation content storage part (73), a reservation state judgment part (75), a radio information reservation content judgment part (77), and a display control part (79). The sound source control part (61) is connected to the sound source changeover part (51) of the operation part (50), the radio circuit (11), the MD (21), the CD (23), and the tape reproducer (25), and selects and activates one of the radio circuit (11), the MD (21), the CD (23) and the tape reproducer (25) on the basis of the instruction inputted from the sound source changeover part (51). The sound source control part (61) includes a radio changeover control part (63), and this radio changeover control part (63) is connected to the changeover switch (17) of the radio circuit (11). When the instruction from the sound source changeover part (51) is for selecting the radio circuit (11), this radio changeover control part (63) operates, and one of the AM radio receiver (13) and the FM radio receiver (15) is selected and activated with the changeover switch (17).

The sound control part (65) causes the alarm sound generation part (31) to generate the alarm sound signal on the basis of the instruction from the reservation state judgment part (75), and at the same time, the sound changeover part (33) makes a changeover so that the alarm sound signal is outputted to the power amplifier (41).

The radio information analysis part (67) includes an internal memory, receives the RDS data signal from the radio information decoder (19), converts it into a code signal, and stores it in the internal memory. In a state where the FM radio receiver (15) is selected and activated, and the radio data system broadcast is received, the RDS data (same kind) is transmitted, for example, every second, and the radio information analysis part (67) updates the storage contents of the internal memory in accordance with the contents each time the RDS data is changed.

The reservation acceptance judgment part (71) receives the instruction from the reservation setting (53) in the operation part (50), and judges a reservation state. When the reservation content is to be stored, the reservation content to be stored is sent to the reservation content storage part (73), and the reservation content storage part (73) stores it. The reservation state judgment part (75) confirms whether the reservation content storage part (73) is in a reserved state, that is, whether it is in a state where a reservation is stored, and if in the reserved state, the reservation state judgment part issues an instruction to the display control part (79) and the sound control part (65).

The radio information reservation content comparison part (77) compares the storage content of the internal memory of the radio information analysis part (67) with the storage content of the reservation content storage part (73). In the reserved state, the reservation content is stored in the reservation content storage part (73), whereas the RDS data of the received radio data system is changed, and the content of the internal memory of the radio information analysis part (67) is changed, and if the storage contents of those are coincident with each other, the reception frequency of the FM radio receiver (15) is set in accordance with that, and the reception of FM radio broadcast according to the reserved broadcast content is started.

### [Operation description]

### [Description of RDS data]

Next, the operation of the embodiment 1 will be described. First, before this operation description, the RDS data will be concretely described. Fig. 2 shows a concrete example of the RDS data, and shows the RDS data obtained in a case where a reception frequency f is made, for example, 98.1 MHz, and a certain FM radio broadcast is received. Column A shows the RDS data at a certain timing, and column B shows the RDS data after a predetermined time passed from that. The RDS data in the column A are such that a broadcasting station name (PS Name) is AAA, a program type (PTY) is 1 (news), a program code (PI) is C201, traffic information (TP) is ON (traffic information broadcast is scheduled), traffic information (TA) is OFF (there is no traffic information broadcast at present), an alternative frequency (AF) is 87.1 MHz, 90.1 MHz, and 101.1 MHz (alternative broadcasting frequency in the same or adjacent area is 87.1 MHz, 90.1 MHz, and 101.1 MHz), and extended other network information (EON) is 107.9 (at present, traffic information is on the air at 107.9 MHz).

Similarly, the RDS data in the column B are such that the broadcasting station name (PS Name) is AAA, the program type (PTY) is 2 (sports), the program code (PI) is C201, the traffic information (TP) is ON (traffic information broadcast is scheduled), the traffic information (TA) is ON (traffic information is on the air at present), the alternative frequency (AF) is 88.5 and 92.7 (alternative broadcasting frequency in the same or adjacent area is 88.5 MHz and 92.7 MHz), and the extended other network information (EON) is 103.5 (at present, traffic information is on the air at 103.5 MHz).

### [Description of reservation setting operation]

Now, in the embodiment 1, the reservation setting part (53) of the operation part (50) sets, for example, the program type (PTY), the traffic information (TP) or the traffic information (TA) and makes a reservation. This reservation setting is performed by causing the reservation content storage part (73) to store a specific code through the reservation acceptance judgment part (71). For example, the reservation of the program type (PTY) is made by causing the reservation content storage part (73) to store plural identification numbers classified in accordance with the content of the broadcast program. For example, news has code 1, and PTY01 meaning that the program type (PTY) with code 01 H is stored in the reservation content storage part (73). During the reception of the FM radio, the radio information decoder (19) outputs the RDS data included in the reception signal, and the radio information analysis part (67) converts it into a code and stores it in the internal memory of the radio information analysis part (67). Now, if the reservation content storage part (73) has PTY01, when the memory content of the radio information analysis part (67) is coincident with PTY01, the FM radio broadcast including the RDS data which has content corresponding to PTY01 and a predetermined frequency f of 98.1 MHz is received.

The traffic program information (TP) is reserved by causing the reservation content storage part (73) to store TP01. Besides, the traffic announce information (TA) is reserved by causing the reservation content storage part (73) to store TA01. The code 01 in TP01 and TA01 indicates that it is ON, and in the case where TP01 is set in the reservation content storage part (73), the FM radio broadcast having this set reservation code TP01, that is, the program in which the broadcast of traffic information is scheduled is received. In the case where TA01 is set in the reservation content storage part (73), the FM radio broadcast in which the traffic information is on the air at present is received.

### [Description of reservation acceptance judgment operation by the reservation acceptance judgment part (71)]

Next, the operation of the reservation acceptance judgment part (71) will be described with reference to Fig. 3. Fig. 3 is a flowchart showing a reservation acceptance judgment operation S10 of this reservation acceptance judgment part 71. In the reservation acceptance judgment operation S10, first, at step S11, a judgment is made as to whether or not the instruction of the reservation setting (53) in the operation part (50) is reservation cancel for the reservation setting content. If the reservation setting instruction is not reservation setting but reservation cancel instruction, and the result of judgment at the step S11 is YES Y, progress to step S12 is made, and the reservation content of the reservation content storage part (73) is erased. If not the reservation cancel instruction but reservation setting instruction, the judgment result at the step S11 becomes NO N. If the step S11 is NO N, progress to step S13 is made, and a judgment is made as to whether or not the AM radio receiver (13) is under reception. If the judgment result at this step S13 is YES Y, a reservation cancel instruction is issued at step S14, and return to the step S11 is made. In this case, since the reservation cancel instruction is issued at the step S14, the judgment result at the step S11 becomes YES Y, and the storage content of the reservation content storage part (73) is erased. If the judgment result at the step S13 is NO N, at step S15, a reservation setting code from the reservation setting (53) is stored in the reservation content storage part (73).

The reservation is the receiving reservation as to the radio data system of the FM radio broadcast, and if the reservation content is not erased but is kept as it is even in the reception of the AM radio broadcast, since the tuner is shared and the FM radio broadcast electric wave can not be received, there is no point in holding the reservation. Besides, if the reservation of the FM radio broadcast is held during the reception of the AM radio broadcast, although the reservation content is displayed on the display part (59), the reservation is not executed, and consequently, there is a fear that the operator (driver) misconceives. According to the embodiment 1, in the reservation acceptance judgment part (71), it is judged whether the AM radio receiver (13) is under reception, and if the AM radio receiver (13) is under reception, since the storage content of the reservation content storage part (73) is erased, there is no fear of such a misconception.

### [Description of reservation judgment operation by the reservation state judgment part (75)]

Fig. 4 is a flowchart showing a reservation state judgment operation S20 by the reservation state judgment part (75). This reservation state judgment operation S20 is performed on the basis of the operation of the AM change (55) in the operation part (50). In this reservation state judgment operation S20, first, at step S21, a judgment as to whether or not the radio data system has been reserved is made on the basis of the storage content of the reservation content storage part (73). If the radio data system is reserved in the reservation content storage part (73), the result of the judgment at the step S21 becomes YES (Y), and the operation of the AM change (55) is nullified at step S22. Subsequently to this step S22, at step S23, a display request of "under FM reservation" is given to the display part (59) by the display control part (79), and a display of "under FM reservation" is carried out on the display part (59). In addition, an output request of an alarm sound is made at step S24, the output request of the alarm sound is given to the alarm sound generation part (31) through the sound control part (65), and the alarm sound generation part (31) generates an alarm sound signal, and further, the sound changeover part (33) is changed over to the side of the alarm sound generation part (31), the alarm sound signal is given to the speaker 43 through the power amplifier (41), and the alarm sound is given to the operator (driver). Incidentally, if the reservation has not been made and the judgment of NO (N) is issued at the step S21, a changeover request to the AM radio is issued at step S25. This changeover request to the AM radio is given to the radio changeover control part (63), and the switch 17 changes the AM radio receiver (13) into the reception state.

As stated above, the reservation state judgment part (75) judges the reservation state of the radio data system, and if the reservation has been made, the display of "under FM reservation" is carried out on the display part (59), and the alarm sound is issued from the speaker (43), so that notice of nullification of the AM change operation is given to the operator (driver), an unnecessary AM change operation is prevented, and a subsequent unnecessary AM change operation is also prevented from being again performed.

### [Radio information reservation content comparison operation by the radio information reservation content comparison part (77)]

Fig. 5 is a flowchart showing a radio information reservation content comparison operation S30 by the radio information reservation content comparison part (77). This operation is an operation of comparing the storage content of the reservation content storage part (73) with the storage content of the memory of the radio information analysis part (67). In this operation S30, first, at step S31, it is judged whether there is a reservation of the radio data system. This judgment is made such that the radio information reservation content comparison part (77) judges whether a reservation is stored in the reservation content storage part (73). If the reservation of the radio data system is stored in the reservation content storage part (73), the judgment result at the step S31 is YES (Y), and at next step S32, it is judged whether the radio data system corresponding to the reservation content is under reception. This is performed by checking the content of the internal memory of the radio information analysis part (67) and the storage content of the reservation content storage part (73) by the radio information reservation content comparison part (77). For example, when the traffic information TP01 is stored in the reservation content storage part (73) and the radio information analysis part (67) shows information different from this, the step 532 becomes NO (N), and progress to step S35 is made. When reception of the reserved traffic information is started in this state, and the content of the internal memory of the radio information analysis part (67) coincides with the storage content of the reservation content storage part (73), the judgment result at the step S35 becomes YES (Y), and at step S36, the sound source 10 is changed over to the FM radio receiver (15). Even if a sound source other than the radio circuit (11), for example, the MD (21) is heard, the changeover is made into the state where the FM radio broadcast is received. Of course, even if the CD (23) is heard or the tape reproducer (25) is heard, the changeover can be made into the state where the FM radio broadcast is received. At this time, the FM radio receiver (15) is controlled to select the traffic information broadcast of the reserved radio data system, and the reception of the reserved traffic information is started.

The same judgment as the judgment at the step S35 is performed also at step S33. When the reception of the broadcast of the same radio data system as the reservation content is started, the judgment result at the step S32 also becomes YES (Y), and progress to step S33 is made. For example, the traffic information TP01 is reserved, and when the reception of the traffic information broadcast correspondent to that is started, the steps S33 and S35, together with the step S32, become YES (Y), and subsequently, when this traffic information broadcast is ended, both the steps S33 and S35 become NO (N), progress is made from the step S33 to step S34, and the sound source (10) is automatically returned to the original state before the reception of the traffic information, for example, the reproduction state of the MD (21).

### Embodiment 2

Fig. 6 is a block diagram showing embodiment 2 of a mobile audio apparatus of this invention. This embodiment 2 includes two power amplifiers (41A) and (41B) arranged at a front seat and a rear seat of a vehicle, two speakers (43A) and (43B), two operation parts (50A) and (50B), and two display parts (59A) and (59B). The power amplifier (41A), the speaker (43A), the operation part (50A), and the display part (59A) are arranged at the front seat, and the power amplifier (41B), the speaker (43B), the operation part (50B), and the display part (59B) are arranged at the rear seat. The other structure is the same as the embodiment 1, and the same portions are designated by the same symbols as those of Fig. 1.

The front seat power amplifier (41A) and the front seat speaker (43A) are connected to an output part of a sound changeover part (33), and similarly, the rear seat power amplifier (41B) and the rear seat speaker (43B) are also connected to the output part of the same sound changeover part (33), and a sound is outputted from one of or both of them through the sound changeover part (33).

The front seat operation part (50A) and the rear seat operation part (50B) are constructed to be equal to each other, and similarly to the operation part (50) of Fig. 1, each of them includes a sound source changeover part (51), a reservation setting (53), an AM change (55), and a radio channel selection part (57). Similarly to the sound source changeover part (51) of Fig. 1, the sound source changeover part (51) of each of the operation parts (50A) and (50B) is connected to a sound source control part (61) of a control microcomputer (60), and selects one sound source in a sound source (10). When different sound sources are selected between the front seat and the rear seat, sounds of both are mixed in a compartment, and accordingly, a structure is adopted such that one of them is selected with priority.

The reservation setting (53) of each of the operation parts (50A) and (50B) is connected to a reservation acceptance judgment part (71) of the microcomputer (60), and although reservation setting can be made from either of the operation parts (50A) and (50B), if the reservation setting is made first from one of them, the first set reservation has priority. The AM change (55) of each of the operation parts (50A) and (50B) is connected to a reservation state judgment part (75) of the microcomputer (60), and an AM changing operation can be made from either of the operation parts (50A) and (50B). The radio selection part (57) of each of the operation parts (50A) and (50B) is connected to a radio circuit (10), and channel selection of the radio can be made from either of the operation parts (50A) and (50B). Both the display parts (59A) and (59B) are connected to a display control part (79), and both carries out the same display.

Even if the AM change 55 is operated by either of the operation parts (50A) and (50B) in the state where one of the operation parts (50A) and (50B) has made the reservation of the radio data system, the AM change operation is nullified by the judgment operation of the reservation state judgment part (75) of Fig. 4, and the display of under FM reservation is carried out on both the display parts (59A) and (59B). In addition, alarm sounds are emitted from both the speakers (43A) and (43B).

### Industrial Applicability

This invention is used for a mobile audio apparatus of a type in which a tuner circuit is shared by an AM radio receiver and an FM radio receiver.

## Claims

1. A mobile audio apparatus in which a tuner is shared by an AM radio receiver (13) for an AM radio broadcast and a FM radio receiver (15) for a FM radio broadcast
**characterized in that**
the mobile audio apparatus comprises two operation parts (50A,50B), both the respective operation parts (50A,50B) are capable of making a receiving reservation to the FM radio broadcast and performing a reception changing operation to the AM radio broadcast, and
in a case of performing the reception changing operation to the AM radio broadcast by either one of the operation parts (50A,50B) in a state where the receiving reservation to the FM radio broadcast has been made by either one of the operation parts (50A,50B), the mobile audio apparatus is adapted to nullify this reception changing operation.

2. The mobile audio apparatus as recited in claim 1, wherein each of the operation parts (50A, 50B) has a function of being capable of making a reservation of a radio data system in the FM radio broadcast.

3. The mobile audio apparatus as recited in claim 2, wherein each of the operation parts (50A, 50B) has a function of being capable of making a reservation of one of a broadcast type (PTY) of the radio data system, and traffic information (TA, TP).

4. The mobile audio apparatus as recited in claim 1, further comprising a reservation content storage part (73) for storing reservation content, and a reservation state judgment part (75) for judging a reservation state on the basis of a storage state of the reservation content storage part (73), wherein in the case of performing the reception changing operation to the AM radio broadcast by either one of the operation parts (50A, 50B) in the state where the reception reservation to the FM radio broadcast has been made by either one of the operation parts (50A, 50B), the reservation state judgment part (75) is adapted to nullify this reception changing operation.

5. The mobile audio apparatus as recited in claim 1, further comprising a reservation content storage part (73) for storing reservation content, and a radio information analysis part (67) for analyzing codes indicating contents of an FM broadcast from the received FM broadcast, wherein when the code from the radio information analysis part (67) coincides with the reservation content in the reservation content storage part (73), the mobile audio apparatus is adapted to automatically receive the FM broadcast according to the reservation content.

6. The mobile audio apparatus as recited in claim 1, further comprising a display part (59A, 59B) for an operator, wherein in the case of performing the reception changing operation to the AM radio broadcast by either one of the operation parts (50A, 50B) in the state where the receiving reservation of the FM radio broadcast has been made by either one of the operation parts (50A, 50B), the display part (59A, 59B) is adapted to notify the operator that the receiving reservation to the FM radio broadcast has been made.

7. The mobile audio apparatus as recited in claim 1, further comprising a sound signal generation part (31) capable of causing a sound to be issued to an operator, wherein in the case of performing the reception changing operation to the AM radio broadcast by either one of the operation parts (50A,50B) in the state where the receiving reservation to the FM radio broadcast has been made by either one of the operation parts (50A,50B), the sound signal generation part (31) is adapted to emit the sound to the operator.

8. The mobile audio apparatus as recited in claim 1, further comprising a display part (59A, 59B) for an operator, and a sound signal generation part (31) capable of causing a sound to be issued to the operator, wherein in the case of performing the reception changing operation to the AM radio broadcast by either one of the operation parts (50A, 50B) in the state where the receiving reservation to the FM radio broadcast has been made by either one of the operation parts (50A, 50B), the display part (59A, 59B) is adapted to notify the operator that the receiving reservation to the FM radio broadcast has been made and the sound signal generation part (31) is adapted to give notice by the sound.

## Patentansprüche

1. Mobiles Audiogerät, bei dem eine Abstimmvorrichtung von einem AM-Radioempfänger (13) für eine AM-Radioübertragung und einem FM- Radioempfänger (15) für eine FM- Radioübertragung geteilt wird,
**dadurch gekennzeichnet, dass**
das mobile Audiogerät zwei Operationsteile (50A, 50B) aufweist, wobei die beiden jeweiligen Operationsteile (50A, 50B) in der Lage sind, einen Empfangsvorbehalt für die FM-Radioübertragung zu machen und einen Empfangsänderungsvorgang zu der AM-Radioübertragung durchzuführen, und
in einem Fall der Durchführung des Empfangsänderungsvorgangs zu der AM-Radioübertragung durch eines der Operationsteile (50A, 50B) in einem Zustand, in welchem der Empfangsvorbehalt für die FM-Radioübertragung durch eines der Operationsteile (50A, 50B) gemacht wurde, das mobile Audiogerät ausgebildet ist zur Ungültigmachung dieses Empfangsänderungsvorgangs.

2. Mobiles Audiogerät nach Anspruch 1, bei dem jedes der Operationsteile (50A, 50B) eine Funktion hat, in der Lage zu sein, einen Vorbehalt eines Radiodatensystems in der FM-Radioübertragung zu machen.

3. Mobiles Audiogerät nach Anspruch 2, bei dem jedes der Operationsteile (50A, 50B) eine Funktion hat, in der Lage zu sein, einen Vorbehalt von einem von Übertragungstypen (PTY) des Radiodatensystems und der Verkehrsinformationen (TA, TP) zu machen.

4. Mobiles Audiogerät nach Anspruch 1, weiterhin aufweisend ein Vorbehaltsinhalt-Speicherteil (73) zum Speichern des Vorbehaltsinhalts, und ein Vorbehaltszustands-Beurteilungsteil (75) zum Beurteilen eines Vorbehaltszustands auf der Grundlage eines Speicherzustands des Vorbehaltsinhalts-Speicherteils (73), wobei in dem Fall der Durchführung des Empfangsänderungsvorgangs zu der AM-Radioübertragung durch eines der Operationsteile (50A, 50B) in dem Zustand, in welchem der Empfangsvorbehalt zu der FM-Radioübertragung durch eines der Operationsteile (50A, 50B) gemacht wurde, das Vorbehaltszustands-Beurteilungsteil (75) ausgebildet ist, diesen Empfangsänderungsvorgang ungültig zu machen.

5. Mobiles Audiogerät nach Anspruch 1, weiterhin aufweisend ein Vorbehaltsinhalts-Speicherteil (73) zum Speichern des Vorbehaltsinhalts, und ein Radioinformations-Analyseteil (67) zum Analysieren von Codes, die den Inhalt einer FM-Ubertragung von der empfangenen FM-Übertragung anzeigen, wobei, wenn der Code von dem Radioinformations-Analyseteil (67) mit dem Vorbehaltsinhalt des Vorbehaltsinhalts-Speicherteils (73) übereinstimmt, das mobile Audiogerät ausgebildet ist zum automatischen Empfangen der FM-Übertragung gemäß dem Vorbehaltsinhalt.

6. Mobiles Audiogerät nach Anspruch 1, weiterhin aufweisend ein Anzeigeteil (59A, 59B) für eine Bedienungsperson, wobei in dem Fall der Durchführung des Empfangsänderungsvorgangs zu der AM-Radioübertragung durch eines der Operationsteile (50A, 50B) in dem Zustand, in welchem der Empfangsvorbehalt der FM-Radioübertragung durch eines der Operationsteile (50A, 50B) gemacht wurde, der Anzeigeteil (59A, 59B) ausgebildet ist, um der Bedienungsperson zu melden, dass der Empfangsvorbehalt zu der FM-Radioübertragung gemacht wurde.

7. Mobiles Audiogerät nach Anspruch 1, weiterhin aufweisend ein Tonsignal-Erzeugungsteil (31), das in der Lage ist, die Ausgabe eines Tons zu einer Bedienungsperson zu bewirken, wobei in dem Fall der Durchführung des Empfangsänderungsvorgangs zu der AM-Radioübertragung durch eines der Operationsteile (50A, 50B) in dem Zustand, in welchem der Empfangsvorbehalt zu der FM-Radioübertragung durch eines der Operationsteile (50A, 50B) gemacht wurde, das Tonsignal-Erzeugungsteil (31) ausgebildet ist, den Ton zu der Bedienungsperson auszugeben.

8. Mobiles Audiogerät nach Anspruch 1, weiterhin aufweisend ein Anzeigeteil (59A, 59B) für eine Bedienungsperson und ein Tonsignal-Erzeugungsteil (31), das in der Lage ist, die Ausgabe eines Tons zu der Bedienungsperson zu bewirken, wobei in dem Fall der Durchführung des Vorbehaltsänderungsvorgangs zu der AM-Radioübertragung durch eines der Operationsteile (50A, 50B) in dem Zustand, in welchem der Empfangsvorbehalt zu der FM-Radioübertragung durch eines der Operationsteile (50A, 50B) gemacht wurde, das Anzeigeteil (59A, 59B) ausgebildet ist, der Bedienungsperson zu melden, dass der Empfangsvorbehalt zu der FM-Radioübertragung gemacht wurde und das Tonerzeugungsteil (31) ausgebildet ist, die Meldung durch Ton zu geben.

## Revendications

1. Appareil audio mobile dans lequel un syntonisateur est partagé par un radiorécepteur AM (13) pour une radiodiffusion AM et un radiorécepteur FM (15) pour une radiodiffusion FM, **caractérisé en ce que** l'appareil audio mobile comprend deux parties opérationnelles (50A, 50B), les deux parties opérationnelles (50A, 50B) respectives sont capables de faire une réservation de réceptionde la radiodiffusion FM et de réaliser une opération de changement de réception vers la radiodiffusion AM, et dans le cas où on réalise l'opération de changement de réception vers la radiodiffusion AM par une des parties opérationnelles (50A,50B) dans un état où la réservation de réception vers la radiodiffusion FM a été faite par l'une quelconque des parties opérationnelles (50A,50B), l'appareil audio mobile est adapté pour annuler cette opération de changement de réception.

2. Appareil audio mobile selon la revendication 1, dans lequel chacune des parties opérationnelles (50A,50B) a pour fonction d'être capable de faire une réservation d'un système de données radio dans la radiodiffusion FM.

3. Appareil audio mobile selon la revendication 2, dans lequel chacune des parties opérationnelles (50A, 50B) a pour fonction d'être capable de faire une réservation d'un des types de diffusion (PTY) du système de données radio, et des inforAMtions de trafic (TA, TP).

4. Appareil audio mobile selon la revendication 1, comprenant en outre une partie de stockage de contenu de réservation (73) pour stocker un contenu de réservation, et une partie d'évaluation d'état de réservation (75) pour évaluer un état de réservation sur la base d'un état de stockage de la partie de stockage de contenu de réservation (73), dans lequel, si on réalise l'opération de changement de réception vers la radiodiffusion AM par l'une des parties opérationnelles (50A, 50B) dans l'état où la réservation de réception vers la radiodiffusion FM a été faite par l'une des parties opérationnelles (50A, 50B), la partie d'évaluation d'état de réservation (75) est adaptée pour annuler cette opération de changement de réception.

5. Appareil audio mobile selon la revendication 1, comprenant en outre une partie de stockage de contenu de réservation (73) pour stocker le contenu de réservation, et une partie d'analyse d'inforAMtions radio (67) pour analyser les codes indiquant le contenu d'une diffusion FM provenant d'une diffusion FM reçue, dans lequel quand le résultat de la partie d'analyse d'inforAMtions radio (67) coïncide avec le contenu de réservation dans la partie de stockage de contenu de réservation (73), l'appareil audio mobile est adapté pour recevoir autoAMtiquement la diffusion FM selon le contenu de la réservation.

6. Appareil audio mobile selon la revendication 1, comprenant en outre une partie d'affichage (59A, 59B) pour un opérateur, dans lequel, si on réalise l'opération de changement de réception vers la radiodiffusion AM par l'une des parties opérationnelles (50A, 50B) dans l'état où la réservation de réception d'une radiodiffusion FM a été faite par l'une des parties opérationnelles (50A, 50B), la partie d'affichage (59A, 59B) est adaptée pour avertir l'opérateur que la réservation de réception de la radiodiffusion FM a été faite.

7. Appareil audio mobile selon la revendication 1, comprenant en outre une partie de génération de signaux sonores (31) capable d'émettre un son transmis à un opérateur, dans lequel si on réalise l'opération de changement de réception vers la radiodiffusion AM par l'une des parties opérationnelles (50A, 50B) dans l'état où la réservation de réception de la radiodiffusion FM a été faite par l'une des parties opérationnelles (50A, 50B), la partie de génération de signaux sonores (31) est adaptée pour émettre le son vers l'opérateur.

8. Appareil audio mobile selon la revendication 1, comprenant en outre une partie d'affichage (59A, 59B) pour un opérateur, et une partie de génération de signaux sonores (31) capable d'émettre un son transmis à l'opérateur, dans lequel, si on réalise l'opération de changement de réservation vers la radiodiffusion AM par l'une des parties opérationnelles (50A, 50B) dans l'état où la réservation de réception de la radiodiffusion FM a été faite par l'une des parties opérationnelles (50A, 50B), la partie d'affichage (59A, 59B) est adaptée pour avertir l'opérateur que la réservation de réception de la radiodiffusion FM a été faite et la partie de génération de signaux sonores (31) est adaptée pour la signifier par un son.
